# EUROPEAN PATENT SPECIFICATION

(11) **EP 2 450 570 B1**
(45) Date of publication and mention of the grant of the patent: **17.07.2013**
(21) Application number: 10189995.3
(22) Date of filing: 04.11.2010
(51) Int. Cl.: F03D 11/00, F28F 13/00

(54) **Cooling arrangement for a wind turbine**
Kühlanordnung einer Windenergieanlage
Agencement de refroidissement pour une éolienne

(43) Date of publication of application: 09.05.2012
(73) Proprietor: Siemens Aktiengesellschaft, 80333 München (DE)
(72) Inventor: Besnerais, Jean Le, 7330, Brande (DK)

(56) References cited:
- EP-A1- 2 053 240
- EP-A2- 1 512 933
- EP-A2- 2 213 877
- WO-A2-2010/085963
- DE-A1-102007 042 338
- DE-U1- 20 014 238
- US-A1- 2010 006 276

## Description

The invention relates to a cooling-arrangement, which is used in connection with a device, preferably with a wind turbine.

A device like an electrical machine (generator) produces heat due to electromagnetic losses inside for example.

Heat is generated asides end-windings of a generator-coil for example. The temperature of the end-windings must be kept below a pre-determined value to ensure the lifetime of the insulated coil for example.

Even the temperature of wind turbine components needs to be monitored and regulated if needed to ensure the lifetime of the components. As wind turbines, especially offshore-wind turbines, has to show a lifetime of at least 20 years this topic needs to be addressed very carefully.

Expensive repair-work has to be avoided, especially as there is only a limited day-number where repair work can be done at an offshore wind turbine.

Different arrangements are known to cool devices like electrical machines (a generator for example). Cooling circuits with air or water may be used independently or as a combination to remove heat out from the device and to its ambient for example.

The cooling system may be placed inside the generator or on top of its housing for example. Heat exchangers are used to transfer the heat from the generator to the ambient air for example.

It is known to locate a cooling arrangement on top of the nacelle of a wind turbine for example. Heat, which is generated inside the nacelle, is transferred by a cooling system to the cooling arrangement. The cooling arrangement may use ambient air, which passes by, for the cooling.

The nacelle and even the cooling-system on its top are transported to a specific site by train or by ship or by truck. Preferably they may be connected and transported together as a common device. Along the way of transportation problems with tunnels and bridges may arise as a typical offshorenacelle shows huge dimensions and even a huge weight.

It is therefore of great importance to have a cooling-arrangement which is able to transfer the heat of the nacelle to the ambient, while
- the cooling arrangement needs to be lightweight,
- the cooling arrangement needs to be connected or disconnected in an easy way with the nacelle, and/or
- the cooling arrangement needs to be as cheap as possible.

All or even some of these requirements may be needed for a cooling arrangement, which is dedicated to be used in combination with a device.

Document DE 200 14 238 U1 describes a heating system of blades of a wind turbine.

Document DE 10 2007 042 338 A1 describes a heat-exchanging system of a wind turbine.

Document WO 2010 085963 A describes a nacelle of a wind turbine with a cooler top.

Document US 2010 000 6276 A1 describes multichannel-heat exchanger.

Document EP 2 213 877 A2 describes a wind turbine having a nacelle with cooler top.

It is the aim of the invention, to provide an improved cooling arrangement, which is used to transfer heat of a device to an ambient airflow.

This aim is reached by the features of claim 1.

Preferred configurations are object of the dependent claims.

According to the invention the arrangement for cooling contains a device and a heat exchanger. The device is coupled with the heat exchanger in a way, that heat, which is generated asides the device, is transferred from the device to the heat exchanger.

The heat exchanger is at least partly arranged into an ambient airflow. The heat exchanger is constructed in a way that the heat is transferred from the heat exchanger into the ambient airflow. For this the heat exchanger contains a suction side and a pressure side, which are arranged and constructed in a way that the ambient air, which passes by close to the sides, is accelerated for an improved heat transfer.

Preferably the pressure side is arranged close to the device while the suction side is arranged in opposition to the pressure side.

Due to the shaped heat exchanger the transfer of heat from the heat exchanger and into the ambient is improved.

Preferably the device is at least partly arranged into an ambient airflow. Preferably the device is a nacelle of a wind turbine, while the heat exchanger is arranged on top of the nacelle preferably.

Due to the shape of the nacelle and due to the shape of the heat exchanger and their interaction the ambient air is accelerated and used for the cooling of the nacelle.

Preferably the heat exchanger is at least partly arranged into a housing. Preferably the heat exchanger or its housing shows a cross section of an airfoil.

The structure of the airfoil is used to accelerate the ambient air. The needed dimensions for the shape of the airfoil can be calculated easily.

Preferably at least a part of the heat exchanger contains a porous material arranged at least at a section of the heat exchanger.

Preferably a like graphite foam is used as porous material for the heat-transfer to the ambient air.

Due to the porous material the heat exchanger show less weight than other known types of heat exchangers.

Due to the porous material and due to a pressure difference, which is induced between the suction side and the pressure side, an additional air flow is induced. This additional air flow is guided through the material thus the heat transfer to the ambient is improved additionally in view to the accelerated air passing by the sides of the heat exchanger.

Preferably the porous material is a high thermal conductivity material, like graphite-foam.

Due to this the complexity and even the costs asides the heat exchanger are reduced.

Preferably the device and the heat exchanger are connected by a cooling-system, which is arranged and used to transfer the heat from the device to the heat exchanger.

Preferably the cooling-system contains a tube, which is filled with a cooling fluid, like oil or water. Even air or other gases may be circulated inside the cooling system.

Preferably the cooling-system is coupled with the foam in a way that the heat is transferred from the cooling-system into the foam easily.

Due to the features cited above an easy interaction between the cooling system and the foam of the heat exchanger is achieved. The tube only needs to be arranged at least partly within the foam.

There is no need for further expensive arrangements to ensure a good thermal contact between the foam and the cooling system.

The graphite foam is a light and shows a high thermal conductivity. It is a porous material which can be easily machined and shaped.

In particular, the foam material can be shaped like an airfoil. Thus a pressure differential between the suction side and the pressure side can be made very easy.

Due to the porous material and due to the pressure difference, which is induced by the sides of the shaped heat exchanger, an additional air flow is induced. This additional air flow is guided through the porous material. Thus the heat transfer is improved additionally in view to the accelerated air, which passes by.

According to the invention preferably the nacelle of the wind turbine is the device, which needs to be cooled.

The heat exchanger may also be preferably arranged asides a blade of the wind turbine, when its nacelle needs to be cooled.

The heat exchanger might be an integrated part of the blade preferably. Thus the foam, which is used preferably asides the heat exchanger, may be arranged inside the blade for example.

The heat exchanger and the foam may even be at least partly integrated asides the blade / within the blade.

Due to the shape of the blade the incorporated foam show the same advantageous surface of the airfoil cross-section.

Due to the differential pressure asides the airfoil cross-section the flow of the ambient air is quote high.

Due to the huge surface of the blade, it is per se a very good heat exchanger.

When the wind turbine is at work also high wind-speeds are acting on the blade. Thus there is a good cooling-situation when the heat asides the nacelle (generator) is produced.

Moreover the heat transfer increases with the rotational speed of the blade and at the same time, where due to generator losses the heat sides the nacelle is increased.

The part of the blade, where the heat exchanger is arranged, is preferably connected with a "water to air heat exchanger", which might be arranged inside the hub.

It is even possible, that a number of heat exchangers according to the invention are used in different combinations.

For example one heat exchanger asides a blade and one heat exchanger asides the nacelle, preferably on its top.

The invention is shown in more detail by help of some figures.
FIG 1 shows a preferred configuration according to the invention,
FIG 2 shows another preferred configuration according to the invention, and
FIG 3 shows a detailed view to the preferred configuration shown in FIG 2.

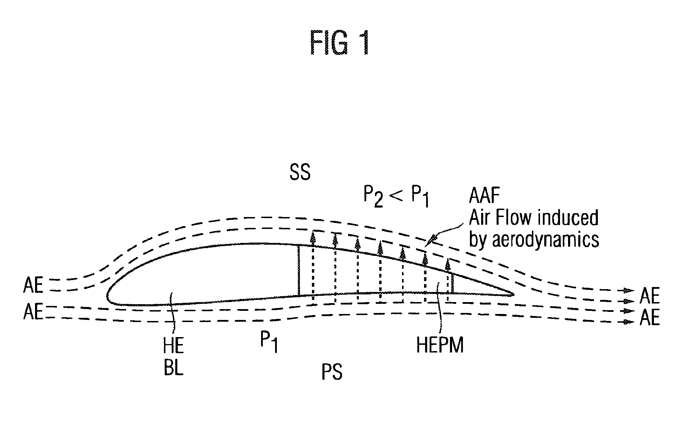

FIG 1 shows a preferred configuration according to the invention.

For this figure the heat of a wind turbine nacelle (not shown in detail here) needs to be transferred from the heat exchanger into the ambient air.

A heat-exchanger HE is an integrated part of a blade BL of the wind turbine.

Due to the shaped blade BL even the heat exchanger HE contains a suction side SS and a pressure side PS.

They are arranged and constructed in a way that ambient air AE, which is passing by close to the sides SS and PS of the blade BL, is accelerated.

Thus the transfer of heat out of the heat exchanger HE and into the ambient air AE is improved.

The heat exchanger HE contains at least a section with a porous material HEPM.

The material HEPM shows preferably a high thermal conductivity. Graphite foam may be used as material preferably.

A pressure difference P1 and P2<P1 is induced by the two sides SS and PS of the shaped heat exchanger HE. Thus an additional air flow AAF is induced.

Due to the porous material HEPM and due to its arrangement and position within the heat exchanger HE the additional air flow AAF is guided through the material HEPM.

Thus the heat transfer is improved additionally in view to the accelerated air AE.

The heat exchanger HE contains the porous material HEPM within at least one section. The porous material may even fill the heat exchanger HE completely.

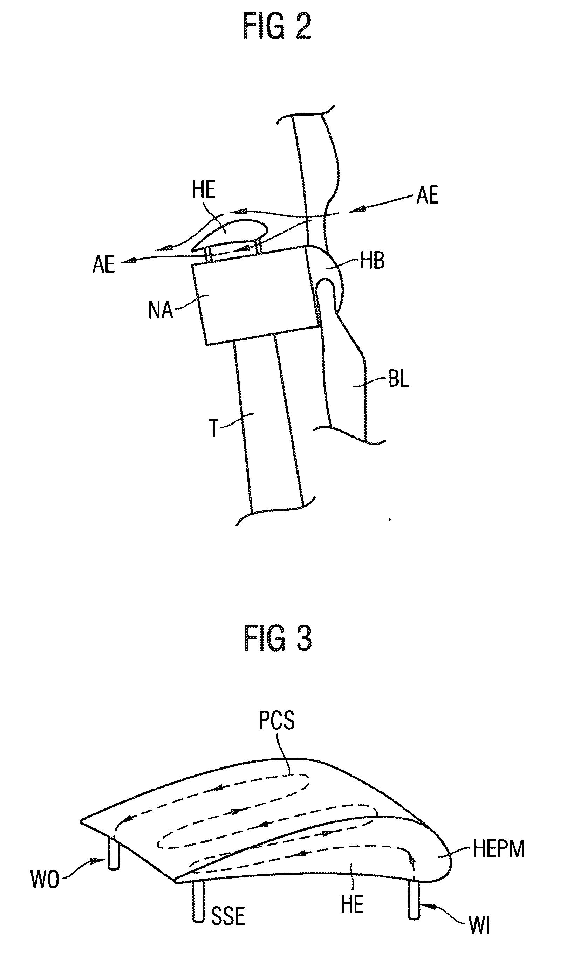

FIG 2 shows another preferred configuration according to the invention.

A wind turbine is shown here, which contains a nacelle NA, a tower T, a hub HB and a blade BL.

The heat exchanger HE is arranged on top of the nacelle NA. The heat of the nacelle NA needs to be transferred from the heat exchanger HE into the ambient air AE, which passes by the nacelle NA and/or the heat exchanger HE.

The heat exchanger HE is shaped according to the cross section of an airfoil. Thus the heat exchanger HE contains a suction side and a pressure side. The sides are arranged and constructed in a way that ambient air AE, which passes by close to its sides, is accelerated.

For this principle and even for the internal structure of the heat exchanger HE reference is made to the situation and to the elements used as described in FIG 1.

Thus the transfer of heat out of the heat exchanger HE and into the ambient air AE is improved.

The heat exchanger HE may contain at least a section with a porous material. The material shows preferably a high thermal conductivity. Graphite foam may be used as material preferably.

Due to the porous material and due to the pressure difference, which is induced by the sides of the shaped heat exchanger HE, an additional air flow is induced. This additional air flow is guided through the porous material. Thus the heat transfer is improved additionally in view to the accelerated air AE.

For this principle reference is also made to FIG 1.

FIG 3 shows a detailed view to the preferred configuration shown in FIG 2.

Here the heat exchanger HE is arranged inside a housing and the heat exchanger HE is shaped according to the cross section of an airfoil.

For this principle and even for the internal structure of the heat exchanger HE reference is made to the situation and to the elements used as described in FIG 1.

The structure of the airfoil is used to accelerate the ambient air AE.

The heat exchanger HE contains a porous material HEPM, like graphite foam. The porous material is arranged at least within a section of the heat exchanger HE.

The nacelle NA and the heat exchanger HE are connected by a cooling-system PCS, which is arranged and used to transfer the heat from the nacelle NA to the heat exchanger HE. This is done by water for example, which is circulated inside the cooling-system PCS by tubes.

A water-filled tube is arranged inside the foam-material HEPM. As the material HEPM is a high thermal conductivity material the exchange of heat from the tube and into the foam is improved, too.

The heat exchanger HE is connected with the nacelle by supporting elements SSE, which might also be used as a waterinlet WI and as a water-outlet WO of the cooling-system PCS.

The heat exchanger HE contains the porous material HEPM within at least one section. The porous material may even fill the heat exchanger completely.

Due to the porous material HEPM and due to the pressure difference as described in FIG 1 an additional air flow is induced. This additional air flow is guided through the material HEPM, thus the heat transfer is improved additionally in view to the accelerated air AE, which passes by the nacelle.

## Claims

1. Cooling-arrangement with a device (NA) and a heat exchanger (HE),
- wherein the device (NA) is coupled with the heat exchanger (HE) in a way, that heat, which is generated asides the device, is transferred from the device (NA) to the heat exchanger (HE),
- wherein the heat exchanger (HE) is at least partly arranged into an ambient airflow (AE), while the heat exchanger (HE) is constructed in a way that the heat is transferred from the heat exchanger (HE) into the ambient airflow (AE),
- wherein the heat exchanger (HE) contains a suction side (SS) band a pressure side (PS),
- wherein the sides are arranged and constructed in a way
- wherein that the ambient air (AE) which passes by close to the that the ambient air (AE) which passes by close to the sides, is accelerated for the heat transfer; **characterized in that** the heat exchanger (HE) contains a porous material (HEPM) within at least a section of the heat exchanger (HE), and the porous material (HEPM) is arranged in a way that due to the pressure difference, which is induced between the sides of the shaped heat exchanger, an additional air flow (AAF) is induced and is guided through the porous material (HEPM) for an additional cooling purpose.

2. Arrangement according to claim 1, **characterized in that** the device is at least partly arranged into an ambient airflow.

3. Arrangement according to claim 1, **characterized in that** the heat exchanger is at least partly arranged into a housing.

4. Arrangement according to claim 1 or to claim 3, **characterized in that** the heat exchanger or its housing shows a cross section of an airfoil.

5. Arrangement according to claim 1, **characterized in that** the porous material is a high thermal conductivity material.

6. Arrangement according to claim 1 or claim 5, **characterized in that** the porous material is graphite-foam.

7. Arrangement according to claim 1, **characterized in that** the device and the heat exchanger are connected by a closed cooling-system, which is arranged and used to transfer the heat from the device to the heat exchanger.

8. Arrangement according to claim 7, **characterized in that** the closed cooling-system contains a tube, which is filled with a cooling fluid.

9. Arrangement according to claim 7 or to claim 8, **characterized in that** the closed cooling-system is coupled with the foam in a way that the heat is transferred from the cooling-system into the foam.

10. Arrangement according to claim 1, **characterized in that** the device is a nacelle of a wind-turbine.

11. Arrangement according to claim 10, **characterized in that** the heat exchanger is arranged on top of the nacelle.

12. Arrangement according to claim 10, **characterized in that** the heat exchanger is at least partly integrated in a blade of the wind turbine.

## Patentansprüche

1. Kühlanordnung mit einer Vorrichtung (NA) und einem Wärmetauscher (HE),
- wobei die Vorrichtung (NA) mit dem Wärmetauscher (HE) so gekoppelt ist, dass Wärme, die an der Vorrichtung erzeugt wird, von der Vorrichtung (NA) auf den Wärmetauscher (HE) übertragen wird,
- wobei der Wärmetauscher (HE) zumindest teilweise in einem Umgebungsluftstrom (AE) angeordnet ist, während der Wärmetauscher (HE) so konstruiert ist, dass die Wärme vom Wärmetauscher (HE) auf den Umgebungsluftstrom (AE) übertragen wird,
- wobei der Wärmetauscher (HE) eine Saugseite (SS) und eine Druckseite (PS) enthält,
- wobei die Seiten so angeordnet und konstruiert sind, dass die Umgebungsluft (AE), die nahe an den Seiten vorbeiströmt, für die Wärmeübertragung beschleunigt wird,
**dadurch gekennzeichnet, dass**
der Wärmetauscher (HE) zumindest in einem Abschnitt davon ein poröses Material (HEPM) enthält und
das poröse Material (HEPM) so angeordnet ist, dass aufgrund der Druckdifferenz, die zwischen den Seiten des geformten Wärmetauschers entsteht, ein zusätzlicher Luftstrom (AAF) entsteht und zum Zwecke einer zusätzlichen Kühlung durch das poröse Material (HEPM) geleitet wird.

2. Anordnung nach Anspruch 1, **dadurch gekennzeichnet, dass** die Vorrichtung zumindest teilweise in einem Umgebungsluftstrom angeordnet ist.

3. Anordnung nach Anspruch 1, **dadurch gekennzeichnet, dass** der Wärmetauscher zumindest teilweise in einem Gehäuse angeordnet ist.

4. Anordnung nach Anspruch 1 oder 3, **dadurch gekennzeichnet, dass** der Wärmetauscher oder sein Gehäuse ein Flügelprofil aufweist.

5. Anordnung nach Anspruch 1, **dadurch gekennzeichnet, dass** es sich bei dem porösen Material um ein sehr wärmeleitfähiges Material handelt.

6. Anordnung nach Anspruch 1 oder 5, **dadurch gekennzeichnet, dass** es sich bei dem porösen Material um Graphitschaum handelt.

7. Anordnung nach Anspruch 1, **dadurch gekennzeichnet, dass** die Vorrichtung und der Wärmetauscher durch ein geschlossenes Kühlsystem verbunden sind, das so angeordnet und benutzt wird, dass es die Wärme von der Vorrichtung auf den Wärmetauscher überträgt.

8. Anordnung nach Anspruch 7, **dadurch gekennzeichnet, dass** das geschlossene Kühlsystem ein Rohr enthält, das mit einem Kühlfluid gefüllt ist.

9. Anordnung nach Anspruch 7 oder 8, **dadurch gekennzeichnet, dass** das geschlossene Kühlsystem so mit dem Schaum gekoppelt ist, dass die Wärme von dem Kühlsystem auf den Schaum übertragen wird.

10. Anordnung nach Anspruch 1, **dadurch gekennzeichnet, dass** es sich bei der Vorrichtung um eine Gondel einer Windenergieanlage handelt.

11. Anordnung nach Anspruch 10, **dadurch gekennzeichnet, dass** der Wärmetauscher oben auf der Gondel angeordnet ist.

12. Anordnung nach Anspruch 10, **dadurch gekennzeichnet, dass** der Wärmetauscher zumindest teilweise in ein Rotorblatt der Windenergieanlage integriert ist.

## Revendications

1. Système de refroidissement comportant un dispositif (NA) et un échangeur de chaleur (HE),
- dans lequel le dispositif (NA) est couplé à l'échangeur de chaleur (HE) de manière à ce que la chaleur, qui est générée sur les côtés du dispositif, soit transférée du dispositif (NA) à l'échangeur de chaleur (HE),
- dans lequel l'échangeur de chaleur (HE) est au moins partiellement agencé dans un flux d'air ambiant (AE), tandis que l'échangeur de chaleur (HE) est construit de manière à ce que la chaleur soit transférée de l'échangeur de chaleur (HE) au flux d'air ambiant (AE),
- dans lequel l'échangeur de chaleur (HE) contient un côté aspiration (SS) et un côté pression (PS),
- dans lequel les côtés sont agencés et construits de manière à ce que l'air ambiant (AE), qui passe à proximité des côtés, soit accéléré pour le transfert de chaleur;
**caractérisé en ce que** l'échangeur de chaleur (HE) contient un matériau poreux (HEPM) à l'intérieur d'au moins une section de l'échangeur de chaleur (HE); et
le matériau poreux (HEPM) est agencé de manière à ce que, en raison de la différence de pression qui est induite entre les côtés de l'échangeur de chaleur profilé, un flux d'air supplémentaire (AAF) soit induit et soit guidé à travers le matériau poreux (HEPM) à des fins de refroidissement supplémentaire.

2. Système selon la revendication 1, **caractérisé en ce que** le dispositif est au moins partiellement agencé dans un flux d'air ambiant.

3. Système selon la revendication 1, **caractérisé en ce que** l'échangeur de chaleur est au moins partiellement agencé dans un boîtier.

4. Système selon la revendication 1 ou la revendication 3, **caractérisé en ce que** l'échangeur de chaleur ou son boîtier présente une section transversale d'un profil aérodynamique.

5. Système selon la revendication 1, **caractérisé en ce que** le matériau poreux est un matériau à haute conductivité thermique.

6. Système selon la revendication 1 ou la revendication 5, **caractérisé en ce que** le matériau poreux est de la mousse de graphite.

7. Système selon la revendication 1, **caractérisé en ce que** le dispositif et l'échangeur de chaleur sont reliés par un système de refroidissement fermé, qui est agencé et utilisé pour transférer la chaleur provenant du dispositif à l'échangeur de chaleur.

8. Système selon la revendication 7, **caractérisé en ce que** le système de refroidissement fermé comporte un tube, qui est rempli d'un fluide de refroidissement.

9. Système selon la revendication 7 ou la revendication 8, **caractérisé en ce que** le système de refroidissement fermé est couplé avec la mousse de manière à ce que la chaleur soit transférée du système de refroidissement à la mousse.

10. Système selon la revendication 1, **caractérisé en ce que** le dispositif est une nacelle d'une turbine éolienne.

11. Système selon la revendication 10, **caractérisé en ce que** l'échangeur de chaleur est agencé sur le dessus de la nacelle.

12. Système selon la revendication 10, **caractérisé en ce que** l'échangeur de chaleur est au moins partiellement intégré dans une aube de la turbine éolienne.
